# EUROPEAN PATENT APPLICATION

(11) **EP 2 980 130 A1**
(43) Date of publication of application: **03.02.2016**
(21) Application number: 13880581.7
(22) Date of filing: 20.12.2013
(51) Int. Cl.: C08J 5/18, B32B 27/00, B32B 27/32

(54) **FILM FOR POLYOLEFIN DECORATIVE SHEET**

(30) Priority: 28.03.2013 JP 2013069088
(71) Applicant: Mitsubishi Plastics, Inc., Tokyo 100-8252 (JP)
(72) Inventor: KURATA Masashi, Nagoya-shi Aichi 453-0862 (JP)
(74) Representative: Ter Meer Steinmeister & Partner
(86) International application number: PCT/JP2013/084260
(87) International publication number: WO 2014/155876

(57) **Abstract**

The purpose of the present invention is to provide a film for a polyolefin decorative sheet that maintains high quality as a decorative sheet having high-concealment performance and the like without compromising printability even when the decorative sheet is thin, that has good film-production characteristics, and that does not generate roller contamination during film production. The solution is a film for a polyolefin decorative sheet having a thickness of less than 60 µm, an average roughness Ra of 0.1 to 5.8 µm and a maximum height roughness Rz of 1 to 25 µm on the roughness curve in accordance with JIS B0601:2001.

## Description

### TECHNICAL FIELD

The present invention relates to a polyolefin film for decorative sheet. The present invention specifically relates to a polyolefin film for decorative sheet, having a thickness of less than 60 µm, as well as exceptional printability, concealing properties and film forming characteristics.

### BACKGROUND ART

Decorative materials such as decorative plywood are used in furniture, architectural interior materials, or the like. Well-known materials are those in which decorative sheet applied with printing and coloring is affixed to plywood or other wood or steel sheets or other backing materials, and paper and plastic films are widely used as materials of these decorative sheets.

Vinyl chloride resins are excellent in design characteristics and adhesiveness, and there are many examples in which these resins are used as plastic film materials for decorative sheets. However, decorative sheets based on polyolefin films have come to be used lately due to problems including treatment of hydrogen chloride gas produced during disposal by incineration after use, or the like, or selection of furnace materials for the incinerator used therein. Decorative sheets based on polypropylene resin films, in particular, have a favorable balance of rigidity and flexibility, and polypropylene materials therefore have come to be much used as films for decorative sheets.

### PRIOR ART REFERENCES

### PATENT REFERENCES

Patent Document 1: Japanese Laid-Open Patent Application 11-172017

### SUMMARY OF THE INVENTION

### PROBLEMS TO BE SOLVED BY THE INVENTION

Such decorative sheets made of plastic film have advantages over paper, including being amenable to embossing and having excellent design characteristics, but there is a problem that the cost is higher than that of paper.

The thickness of the film could be reduced in order to lower the cost of decorative sheets made of film, but reducing the thickness lowers the concealing performance, making it necessary to add pigments in high concentration, or to increase the thickness ratio of the intermediate layer. On the other hand, in cases in which the front and back layers have been reduced in thickness, when the material is embossed with a high-roughness embossing roll, the intermediate layer comes into contact with the embossing roll, generating roll contamination. Additionally, when the surface roughness of the film is high, the material cannot be printed uniformly during printing.

An object of the present invention is to provide a polyolefin film for decorative sheet, which, despite being thin, maintains high quality as a decorative sheet having high concealing performance and the like, without compromising printability, which does not generate roll contamination during film production, and which has good film production characteristics.

### MEANS FOR SOLVING THE PROBLEMS

As a result of painstaking investigation, the inventors completed the present invention upon discovering that the aforementioned problem can be solved, to obtain a film which, despite having a thickness of less than 60 µm, has satisfactory printability due to adjustment of the balance of the both the arithmetic mean roughness Ra and the maximum height Rz of the roughness curve at the film surface.

Specifically, the present invention provides:
(1) A polyolefin film for decorative sheet, wherein said film has a thickness of less than 60 µm, an arithmetic mean roughness Ra of 0.1-5.8 µm and a maximum height roughness Rz of the roughness curve of 1-25 µm in accordance with JIS B0601:2001.
(2) The polyolefin film for decorative sheet according to (1), wherein said film comprises at least a front layer, an intermediate layer, and a back layer, and the pigment content of the intermediate layer is greater than the pigment content of the front layer and back layer, or the pigment is included in the intermediate layer only.
(3) The polyolefin film for decorative sheet according to (2), wherein the thickness of the intermediate layer, as a proportion of the total thickness of the film for a polyolefin decorative sheet, is 70-99.9%, and the color difference between when the film is placed on a white portion and when the film is placed on a black portion of JIS K 5600 concealing power test paper is 4.0 or lower.
(4) The polyolefin film for decorative sheet according to (2) or (3), wherein the intermediate layer is not exposed at the surface of the polyolefin film for decorative sheet.
(5) The polyolefin film for decorative sheet according to any of (1) to (4), wherein the thickness is 50 µm or lower.
(6) A decorative sheet employing the polyolefin film for decorative sheet according to any of (1) to (5).

### ADVANTAGES OF THE INVENTION

According to the present invention, there can be provided a thin polyolefin film for decorative sheet (less than 60 µm), which maintains high quality as a decorative sheet having high concealing performance and the like, without compromising printability, which does not generate roll contamination during film production, and which has good film production characteristics.

### BEST MODE FOR CARRYING OUT THE INVENTION

The present invention according to a first aspect provides a polyolefin film for decorative sheet, wherein said film has a thickness of less than 60 µm, an arithmetic mean roughness Ra of 0.1-5.8 µm and a maximum height roughness Rz of the roughness curve of 1-25 µm in accordance with JIS B0601:2001.

In the present invention, the arithmetic mean roughness Ra is 0.1-5.8 µm, preferably 0.1-4.0 µm, and more preferably 0.1-3.0 µm. The maximum height roughness Rz of the roughness curve is 1-25 µm, preferably 1-20 µm, and more preferably 1.5-15 µm. When both Ra and Rz are set within these ranges, a polyolefin film for decorative sheet which, despite being thin, maintains high quality as a decorative sheet having high concealing performance and the like without compromising printability, does not generate roll contamination during film production, and has good film production characteristics, is obtained.

The roughness of the film surface can be produced, for example, by imparting a profile of specified roughness to the surface of the molding rolls used during film production, and producing the film while pressing the molding rolls against the film, thereby forming an embossed profile on the film surface. Molding of the film surface roughness is not limited to this method, and other methods, for example, sandwich lamination employing a film having asperities, blasting, or the like, may be employed as well.

The polyolefin film for decorative sheet of the present invention is constituted of three or more layers, and is provided at least with a front layer, an intermediate layer, and a back layer. Here, the front layer refers to the layer situated on the side on which printing will be carried out during production of the decorative sheet, and the back layer to the layer on the opposite surface side thereof. The film may have a further layer comprising polyolefin resin, situated between the front layer and the intermediate layer, or between the back layer and the intermediate layer. Additionally, the film may have an adhesive layer situated between the front layer and the intermediate layer, or between the back layer and the intermediate layer.

The thickness of the intermediate layer, as a proportion of the total thickness of the polyolefin film for decorative sheet of the present invention, is preferably 70%-99.9%, and more preferably 75%-95%.

When the film transportability and the fact that transfer of embossing to the surface of the film occurs during rewinding are taken into consideration, it is preferable for the back surface to have average roughness Ra of 0.1-5.8 µm, and maximum height roughness Rz of the roughness curve of 1-25 µm.

It is preferable that the intermediate layer of the polyolefin film for decorative sheet of the present invention not be exposed at the film surface.

The front layer, intermediate layer, and back layer of the polyolefin film for decorative sheet of the present invention will preferably include at least one polypropylene resin or polyethylene resin, and more preferably include a polypropylene resin.

Examples of polypropylene resins include propylene homopolymers, copolymers, or mixtures of the aforementioned homopolymers and/or copolymers with other polymers (polymer blends). Examples of the copolymers include random copolymers or block copolymers of propylene with ethylene or other α-olefins, graft copolymers of propylene in which a polyolefin based polymer is the backbone polymer, and the like. The α-olefin copolymerizable with propylene is preferably one having a carbon number of 4-12; for example, there may be cited 1-butene, 1-pentene, 1-hexene, 1-heptene, 1-octene, 4-methyl-1-pentene, 1-decene, and the like, with a single type, or a mixture of two or more types, being employed. The mixture proportion of the α-olefin is preferably 1-10 wt%, and especially preferably 2-6 wt%, with respect to the propylene.

Examples of the polyolefin based copolymer used for the backbone polymer of the aforementioned propylene graft copolymers include ethylene-propylene rubber, ethylene-butene rubber, ethylene-propylene-diene rubber, and the like.

Examples of polymers that can be mixed with propylene homopolymers and/or copolymers to give polymer blends include isoprene rubber, butadiene rubber, butyl rubber, propylene-butadiene rubber, acrylonitrile-butadiene rubber, acrylonitrile-isoprene rubber, and other such diene based rubbers; ethylene-propylene copolymer rubber, ethylene-propylene unconjugated diene rubber, ethylene-butadiene copolymer rubber, and other such polyolefin based thermoplastic elastomers; and styrene-butadiene based, styrene-isoprene based, or other such styrene based thermoplastic elastomers. Of these, styrene-butadiene based thermoplastic elastomers are preferred. The styrene based thermoplastic elastomer is preferably one that has been hydrogenated. The polymer is preferably mixed in an amount of 5-80 wt%, and especially preferably 20-60 wt%.

In the polyolefin film for decorative sheet of the present invention, it is especially preferable to employ a propylene homopolymer, or a mixture of a propylene homopolymer and a random copolymer. The preferred mixture ratio for the mixture of the propylene homopolymer and random copolymer is 100:0 to 30:70, more preferably 100:0 to 50:50.

By setting the mixture ratio of the mixture of the propylene homopolymer and random copolymer to within the aforementioned range, satisfactory strength can be obtained even when the thickness has been reduced, and the occurrence of problems during film transport can be minimized.

Additionally, it is sufficient for the aforementioned mixture proportion to be employed for at least the intermediate layer; the mixture ratios of the other layers may be modified, as appropriate, depending on the required capabilities.

The polypropylene based resin employed in the polyolefin film for decorative sheet of the present invention preferably has a melt flow rate of 0.1-30 (g/10 min.) under conditions of 230°C, 2.16 kgf. Where the melt flow rate is 0.1 or higher the material is easy to mold, and a smooth film is easily obtained. Where the melt flow rate does not exceed 30, the melt viscosity is not lowered excessively, to the point that molding into a film becomes difficult.

Examples of polyethylene resins include ethylene homopolymers, copolymers of ethylene and other monomers copolymerizable therewith, in which ethylene is the main component (low-density polyethylene (LDPE), linear low-density polyethylene (LLDPE), high-density polyethylene (HDPE), polyethylene obtained through polymerization employing a metallocene catalyst, and the like), or mixtures of the aforementioned homopolymers and/or copolymers with other polymers (polymer blends) and the like. The polyethylene based resin preferably has a melt flow rate of 0.1-30 (g/10 min.) under conditions of 190°C, 2.16 kgf. Where the melt flow rate is 0.1 or higher, the material is easy to mold, and a smooth film is easily obtained. Where the melt flow rate does not exceed 30, the melt viscosity is not lowered excessively, to the point that molding into a film becomes difficult.

The polyolefin film for decorative sheet of the present invention includes a pigment, with either the pigment content of the intermediate layer being greater than the pigment content of the front layer and the back layer, or the pigment being included in the intermediate layer only. By adopting this lamination configuration in which the intermediate layer of the film includes a large amount of pigment, while pigment is added to the front layer and the back layer in amounts that are as small as possible, or not added at all, the building up of gum during film production can be prevented in a preferential manner, even when the amount of pigment is large. Consequently, it is possible to obtain a film with high concealing power and good film production characteristics, even when film thickness is reduced.

As pigments, it is possible to use either organic pigments or inorganic pigments; for example, titanium oxide, carbon black, iron oxide, azo compounds, phthalocyanine compounds, titanium oxide/antimony oxide/nickel oxide solid solutions, and the like can be cited as examples. The pigment content will depend in part on the concealing performance required of the decorative sheet, but is preferably included in a range of 1-60 weight parts per 100 weight parts of the polyolefin based resin, more preferably included in a range of 5-60 weight parts, and still more preferably included in a range of 10-60 weight parts.

By including pigments within the aforementioned ranges, good concealing performance is obtained, even in cases of reduced film thickness.

It is preferable for an ultraviolet absorber and/or a hindered amine light stabilizer to be blended into the polyolefin film for decorative sheet of the present invention.

The blended amount of the ultraviolet absorber is preferably 0.01-10 weight parts, especially 0.05-5 weight parts, per 100 weight parts of the polyolefin resin in the respective layers. Where the blended amount is 0.01 or higher weight part, the effects of preventing brown discoloration and degradation are readily obtained, and where the amount does not exceed 10 weight parts, effects commensurate with the blended amount are obtained, and there is no risk of giving rise to bleeding.

As ultraviolet absorbers employed in the polyolefin film for decorative sheet of the present invention, 2-[2'-hydroxy-3'-(3",4",5",6"-tetrahydrophthalimide methyl)-5'-methylphenyl]benzotriazole (molecular weight 388), 2-[2'-hydroxy-3,5-bis(α,α-dimethylbenzyl)phenyl]-2H-benzotriazole (molecular weight 448), 2,2-methylenebis[4-(1,1,3,3-tetramethylbutyl-6-(2H-benzotriazol-2-yl)phenol) (molecular weight 659), and other benzotriazole based ultraviolet absorbers, and 2,4-dihydroxybenzophenone, 2-hydroxy-4-methoxybenzophenone, 2-hydroxy-4-octoxybenzophenone, 2,2'-dihydroxy-4-dimethoxybenzophenone, bis(2-methoxy-4-hydroxy-5-benzoylphenyl)methane, and other such benzophenone based ultraviolet absorbers, can be cited as examples.

Of the aforementioned ultraviolet absorbers, employing benzotriazole based ultraviolet absorbers is favorable in terms of minimizing coloration of products, and those having molecular weight in the range of 380-1,000, preferably in the range of 400-800, are more favorable. By setting the molecular weight to within the aforementioned range, the bloom-preventing effect is increased.

The blended amount of the hindered amine light stabilizer is preferably 0.01-10 weight parts per 100 weight parts of the polyolefin resin in the respective layers. Where the blended amount is 0.01 or higher weight part, a stabilizing effect is readily obtained, and where the amount does not exceed 10 weight parts, effects commensurate with the blended amount are obtained, and there is no risk of giving rise to bloom.

Examples of hindered amine light stabilizers include bis(2,2,6,6,-tetramethyl-4-piperidyl)sebacate, bis(1,2,2,6,6-pentamethyl-4-piperidyl) 2-(3,5-di-t-butyl-4-hydroxybenzyl)2-n-butylmalonate, a succinic acid dimethyl-1-(2-hydroxyethyl)-4-hydroxy-2,2,6,6-tetramethylpiperidine polycondensate, poly[(6-(1,1,3,3-tetramethylbutyl)amino-1,3,5-triazine-2,4-diyl} {(2,2,6,6-tetramethyl-4-piperidyl)imino}hexamethylene {2,2,6,6-tetramethyl-4-piperidyl)imino}], and other hindered amine light stabilizers.

Further, other synthetic resins, and, if needed, antioxidants, slip agents, coloring agents, fillers, nucleating agents, and other additives may be added to the film for a polyolefin decorative sheet of the present invention, within ranges such that the object of the present invention is not impaired. These additives are typically used pre-blended in high concentration into a resin (masterbatch).

As the method for manufacturing the polyolefin film for decorative sheet, there may be employed, with no particular limitations, T-die extrusion molding, inflation molding, calendering, and other such typical methods for molding polyolefin resin films.

The thickness of the polyolefin film for decorative sheet of the present invention is preferably less than 60 µm, and more preferably no more than 50 µm. By making the film thin in this manner, there is a cost advantage relative to paper.

There is no particular limitation as to the lower limit value of thickness, but taking productivity into consideration, it is preferably 20 µm or higher.

The thickness of the polyolefin film for decorative sheet is the average of the film thickness measured using a 0.001 mm-graduated dial gauge in accordance with JIS B 7503, and refers to the arithmetic mean measured at sites and with a sample count that are typically considered in cases of measuring film thickness.

The surface roughness of the polyolefin film for decorative sheet of the present invention, specifically, the arithmetic mean roughness Ra measured in accordance with JIS B0601:2001, using a sensing pin having a tip radius of 2 µm and a conical taper angle of 60°, under measurement conditions of a measurement force of 0.6 mN, a cutoff value λc of 0.8 mm, an evaluation length of 4.0 mm, Gaussian filter motion, a 300-cutoff ratio class λs filter, and an evaluation speed of 0.3 mm/s, is 0.1-5.8 µm, and the maximum height roughness Rz of the roughness curve, is 1-25 µm. By virtue of having such surface roughness, the polyolefin film for decorative sheet of the present invention can have good printability.

The surface roughness of the polyolefin film for decorative sheet of the present invention can be adjusted as desired, for example, in T-die molding or calendering, by varying the surface profile of the chill rolls when the molten resin is nipped and chilled thereby. By nipping the molded film with heated rolls, a surface profile in accordance with the surface profile of the nip rolls can be impressed thereon.

The surface roughness can be adjusted as desired by other known methods for impression of surface profiles.

The polyolefin film for decorative sheet of the present invention is provided at a minimum with a front layer, an intermediate layer, and a back layer, and the pigment content of the intermediate layer is greater than the pigment content of the front layer and back layer, or the pigment is included in the intermediate layer only. The thickness of the intermediate layer as a proportion of total film thickness is 70%-99.9%, and the color difference between the case in which the film is placed on a white portion and the case in which the film is placed on a black portion of JIS K 5600 concealing power test paper is 4.0 or less. Thus, despite being as thin as less than 60 µm, high product quality as a decorative sheet having good film production characteristics and high concealing performance can be maintained.

The present invention according to another aspect provides a decorative sheet employing the aforedescribed polyolefin film for decorative sheet of the present invention.

As such a decorative sheet, there may be cited, for example, one having a printed layer formed on the front layer side of the aforedescribed polyolefin film for decorative sheet, and a transparent surface layer laminated thereon. In specific terms, the decorative sheet of the present invention can be manufactured by carrying out a corona treatment on one or both surfaces of the polyolefin film for decorative sheet of the present invention, applying a primer of which the main ingredient is a chlorinated polyolefin resin or the like, performing printing of wood grain onto the treated sheet through gravure printing, and then affixing a transparent sheet and carrying out an embossing treatment.

Typically, the surface of a decorative sheet is frequently furnished with a surface layer for improving the weather resistance, wear resistance, abrasion resistance, and the like, of the decorative sheet, and this layer can be formed by lamination or coating of a polyolefin resin, polyester resin, acrylic resin, urethane resin, or the like. Embossing may be carried out on the surface layer.

The printed layer can be formed by employing an ink in which a pigment or the like is dispersed, doing so by a method for forming the layer by printing such as gravure printing, offset printing, offset gravure printing, silkscreen printing, and the like, or by a transfer process. In order to improve cohesion between the printing layer and the decorative material base sheet, it is preferable to carry out a corona treatment of the decorative material base sheet surface on which printing will be carried out. It is preferable to provide a primer layer between the base sheet and the printed layer, as adhesion between the two can be improved further. As the primer layer, there can be cited solutions having a chlorinated polyolefin resin, polyester resin, ethylene-vinyl alcohol copolymer, or the like as the main ingredient, to which a filler is added if needed.

### EXAMPLES

The present invention will be described in detail below through examples; however, the present invention is not limited by the following examples, insofar as there is no departure from the spirit thereof.

### <Examples 1-5, Comparative Examples 1-3>

### Preparation of polyolefin films for decorative sheet

Using the formulations shown in Table 1, and using a single 50 mmφ extruder and two 35 mmφ extruders as T-die extruders (T-die: 650 mm wide), resins were extruded under conditions of a die temperature of 230°C, and nip molding was performed with a rubber molding roll and a metal molding roll through which cold water was passed, to fabricate films for decorative sheets of 50-60 µm in thickness. The surface roughness of each sample was adjusted by modifying the embossing profile of the metal molding roll.

The following evaluations were performed on the obtained films. Results are shown in Table 1.

### 1) Surface roughness measurements (Ra, Rz)

Measured following a method conforming to JIS B0601:2001, with a SURFCOM FLEX-50A surface roughness profile gauge made by Tokyo Seimitsu Co. Ltd, and employing a sensing pin having a tip radius of 2 µm and a conical taper angle of 60°, under conditions of a measurement force of 0.6 mN, a cutoff value λc of 0.8 mm, an evaluation length of 4.0 mm, Gaussian filter motion, a 300-cutoff ratio class λs filter, and an evaluation speed of 0.3 mm/s.

### 2) Concealing performance

With the film placed on a white portion and placed on a black portion of JIS K 5600 concealing power test paper, color measurement was performed at an incidence angle of 10° with a D-65 illuminant, using a SPECTROPHOTOMETER CM-2500d made by KONICA MINOLTA, to obtain the color difference (ΔE) between the two.

The following criteria were employed for evaluation of concealing performance due to the color difference (ΔE).
○: (ΔE) is 4.0 or less
x: (ΔE) is greater than 4.0

### 3) Printability

SBM-NT 95 black (M) ink made by Dainichi Seika Colors & Chemicals Mfg. Co. Ltd. and the diluent solvent NT-HAIMIRAKKU No. 2 made by Dainichi Seika Colors & Chemicals Mfg. Co. Ltd. were mixed evenly, adjusting the viscosity to 16-18 seconds with a Zahn Cup #3.

Evaluations were performed employing gravure plates having a <0 (compressed) engraving angle, an engraved line count of 70 L/cm, and a cell width of 180 µm, in a GP-2 planographic gravure printing machine made by Kurabo Industries Ltd. The impression cylinder pressure was set to apply pressure at the 50 mark from the kiss-touch, and the doctor, installed at a 40° angle, was set to apply pressure at the 70 mark from the kiss-touch.

With subsequently prepared ink, in optimal amounts such that neither the amount of ink was too small, nor ink leaked out from the device, printing tests were carried out at a printing speed of 30 m/min. The results were evaluated on the following criteria.
○: Ink appeared to the naked eye to be in an evenly coated state
x: Ink appeared to the naked eye to be uneven

In the table, "Homo PP" denotes MA3U (made by Nihon Polypro Co. Ltd.), "Random PP" denotes FX3B (made by Nihon Polypro Co. Ltd.), "LDPE" denotes LC500 (made by Japan Polyethylene Corp.), MePE denotes SP0540 (made by Prime Polymer Co.) and "Pigment MB" contains 65 wt% titanium oxide, 30 wt% of random PP, and 5 wt% of other dispersants.

The values for the added amount of the pigment MB in the table indicate weight parts, when the total amount of resin included in the intermediate layer is 100 weight parts.

**[Table 1]**

| | | | Ex. 1 | Ex. 2 | Ex. 3 | Ex. 4 | Ex. 5 | Cmp.1 | Cmp.2 | Cmp.3 |
|---|---|---|---|---|---|---|---|---|---|---|
| Thickness | | µm | 50 | 50 | 50 | 50 | 55 | 50 | 50 | 50 |
| Front layer | HomoPP | wt | 85 | 85 | 75 | 85 | 85 | 85 | 85 | 85 |
| | RandomPP | wt | 15 | 15 | 15 | 15 | 15 | 15 | 15 | 15 |
| | LDPE | wt | 0 | 0 | 5 | 0 | 0 | 0 | 0 | 0 |
| | MePE | wt | 0 | 0 | 5 | 0 | 0 | 0 | 0 | 0 |
| Intermediate layer | HomoPP | wt | 85 | 85 | 75 | 85 | 85 | 85 | 85 | 85 |
| | RandomPP | wt | 15 | 15 | 15 | 15 | 15 | 15 | 15 | 15 |
| | LDPE | wt | 0 | 0 | 5 | 0 | 0 | 0 | 0 | 0 |
| | MePE | wt | 0 | 0 | 5 | 0 | 0 | 0 | 0 | 0 |
| | PigmentMB | wt | 40 | 40 | 40 | 40 | 40 | 40 | 40 | 40 |
| Back layer | HomoPP | wt | 85 | 85 | 75 | 85 | 85 | 85 | 85 | 85 |
| | RandomPP | wt | 15 | 15 | 15 | 15 | 15 | 15 | 15 | 15 |
| | LDPE | wt | 0 | 0 | 5 | 0 | 0 | 0 | 0 | 0 |
| | MePE | wt | 0 | 0 | 5 | 0 | 0 | 0 | 0 | 0 |
| Surface roughness | Ra | µm | 0.1 | 0.4 | 0.8 | 2.0 | 1.0 | 5.9 | 5.9 | 6.1 |
| | Rz | µm | 1.5 | 3.1 | 5.5 | 12.6 | 6.9 | 26.1 | 26.1 | 30.0 |
| Printability | | | ○ | ○ | ○ | ○ | ○ | × | × | × |
| Thickness ratio of intermediate layer | | | 80 | 80 | 80 | 80 | 90 | 80 | 60 | 80 |
| Roll contamination | | | ○ | ○ | ○ | ○ | ○ | × | ○ | × |
| Concealing performance | | | ○ | ○ | ○ | ○ | ○ | ○ | × | ○ |

The films of Examples 1-5 have exceptional printability, roll contamination, and concealing performance, and therefore can provide thin (less than 60 µm) polyolefin films for decorative sheets, which maintain high quality as a decorative sheet having high concealing performance and the like, without compromising printability, which do not generate roll contamination during film production, and which have good film production characteristics.

## Claims

1. A polyolefin film for decorative sheet, wherein said film has a thickness of less than 60 µm, an arithmetic mean roughness Ra of 0.1-5.8 µm and a maximum height roughness Rz of the roughness curve of 1-25 µm in accordance with JIS B0601:2001.

2. The polyolefin film for decorative sheet according to claim 1, wherein said film comprises at least a front layer, an intermediate layer, and a back layer, and the pigment content of the intermediate layer is greater than the pigment content of the front layer and back layer, or the pigment is included in the intermediate layer only.

3. The polyolefin film for decorative sheet according to claim 2, wherein the thickness of the intermediate layer, as a proportion of the total thickness of the film for a polyolefin decorative sheet, is 70-99.9%, and the color difference between when the film is placed on a white portion and when the film is placed on a black portion of JIS K 5600 concealing power test paper is 4.0 or lower.

4. The polyolefin film for decorative sheet according to claim 2 or 3, wherein the intermediate layer is not exposed at the surface of the film for a polyolefin decorative sheet.

5. The polyolefin film for decorative sheet according to any of claims 1 to 4, wherein the thickness is 50 µm or lower.

6. A decorative sheet employing the polyolefin film for decorative sheet according to any of claims 1 to 5.
